# FASCICULE DE BREVET EUROPEEN

(11) **EP 0 325 550 B1**
(45) Date de publication et mention de la délivrance du brevet: **25.10.1995**
(21) Numéro de dépôt: 89480006.9
(22) Date de dépôt: 13.01.1989
(51) Int. Cl.: B60L 11/18

(54) **Système de transport urbain électrique à recharge automatisée**
Städtisches, elektrisches Transportsystem mit automatisierter Nachladung
Electrical urban transport system using automated recharging

(30) Priorité: 18.01.1988 FR 8800816
(43) Date de publication de la demande: 26.07.1989
(73) Titulaire: Parienti, Raoul, 06000 Nice (FR)
(72) Inventeur: Parienti, Raoul, 06000 Nice (FR)

(56) Documents cités:
- DE-U- 8 611 058
- FR-A- 2 548 808
- GB-A- 2 178 211
- US-A- 4 181 188
- PATENT ABSTRACTS OF JAPAN, vol. 9, no. 256 (M-421)[1979], 15 octobre 1985; & JP-A-60 106 302

## Description

La présente invention concerne un système de transport urbain de passagers. La circulation dans les villes pose de plus en plus de problèmes. Soit on utilise son propre véhicule, ce qui nous oblige à déplacer environ une tonne de feraille et à occuper au sol une
surface d'environ 8 mètres carrés avec tous les problèmes de stationnement que cela génère. Soit on utilise les transports en commun, et là, on devient tributaire des horaires plus ou moins aléatoires et des arrêts obligatoires.

Le brevet GB-A-2 178 211 dont le titre est : "système de contrôle", décrit un système capable de contrôler via un système informatique centralisé, l'accès à bord d'un véhicule de location ou l'accès d'une porte d'hôtel, ainsi que le paiement d'une telle prestation grâce à des jetons pourvus d'une mémoire programmable.

Le document décrit également une des applications particulière du système selon le préambule de la revendication 1.

La présente invention apporte une solution aux problèmes de la circulation et du stationnement dans les villes. Le système est caractérisé en ce que chaque (1) véhicule possède un réservoir d'air rempli par une turbine réversible pendant les décélérations et les périodes de freinage et des moyens (11) capables de ne restituer ladite carte support de mémoire programmable (10) à l'utilisateur que lorsque que le véhicule (1) arrive audit emplacement de stationnement (2) permettant la recharge des accumulateurs, la reconnaissance entre le véhicule (1) et l'emplacement (2) étant effectuée de manière optique par l'envoi d'un code infrarouge codé, ou de façon électrique par l'envoi d'un courant faible, le courant de charge ne circulant qu'après cette reconnaissance mutuelle entre le véhicule et l'emplacement spécialisé.

Ainsi le système est constitué d'une flotte captive de petits véhicules automobiles se déplaçant grâce à un moteur électrique. L'énergie nécessaire au fonctionnement du moteur est contenue dans des accumulateurs se trouvant dans chaque véhicule. Le rechargement de ces accumulateurs doit impérativement avoir lieu, sur l'un des emplacements spécialement aménagé dans les différents quartiers de la ville. Pour utiliser ce moyen de transport, il faut être en possession d'une carte, support de mémoire morte programmable, qui pourra soit être prépayée comme la "télécarte" des postes, soit nécessiter une facturation à posteriori envoyée au domicile de l'utilisateur. L'utilisation chronologique de ce moyen de transport est donc la suivante :
- il faut trouver une station contenant des véhicules libres et suffisamment rechargés (voyant à l'extérieur du véhicule). Il faut ensuite introduire la carte dans le lecteur situé à l'extérieur du véhicule. Si la carte est validée, il faut ensuite taper son code confidentiel, comme pour les cartes bancaires, sur un clavier à côté du lecteur. Quand le code est reconnu, les portes ou le toit pivotant se déverrouille et le "contact" est mis, le véhicule est prêt à rouler pour une destination choisie, dans les limites du territoire urbain.

L'option toit pivotant permet de pouvoir rouler en décapotable lorsque le temps le permet. La seule contrainte consiste à garer son
véhicule dans l'une des nombreuses stations permettant la recharge des accumulateurs. Quand il arrive sur l'un de ces emplacements, le véhicule "le reconnaît" et rend ensuite sa carte à l'utilisateur, ce qui évite le risque de voir des véhicules abandonnés un peu n'importe où en dehors des emplacements réservés. Une procédure spéciale permet de quitter le véhicule pendant quelques instants, sans pour autant s'arrêter dans l'une des stations précédemment décrites. Il suffit pour cela d'appuyer sur une touche "Arrêt temporaire", ce qui a pour effet, de verrouiller les portes ou le toit une fois que l'on est sorti du véhicule.

La carte n'est pas restituée et la facturation continue pendant l'arrêt du véhicule à un coût inférieur mais suffisant pour dissuader les arrêts prolongés. Pour entrer à nouveau dans le véhicule, il faudra retaper son code confidentiel sur le clavier.

En ce qui concerne le rechargement des accumulateurs, deux solutions sont possibles :
- La première solution est d'utiliser des contacts galvaniques se trouvant sur un bras articulé du véhicule. Lors de l'arrêt dans une station, le bras se déplie et entre en contact avec une prise spécialement aménagée. Bien entendu, le courant de charge ne passe que lorsqu'il y a eu reconnaissance mutuelle entre la prise et le véhicule. Cette reconnaissance peut être effectuée de façon optique, par exemple par l'envoi d'un rayon infrarouge codé ou de façon électrique par l'envoi de courant faible.
- La deuxième solution n'utilise pas de contacts galvaniques. On se sert de courants induits suivant le principe utilisé dans les transformateurs entre le primaire et le secondaire. Le primaire comprenant une demi carcasse magnétique et le secondaire étant solidaire d'un bras (3) susceptible de venir en contact avec le sol lors de l'arrêt définitif du véhicule. Comme précédemment, le courant de charge ne circule que lorsqu'il y a eu reconnaissance mutuelle entre le primaire et le secondaire.

Toujours en ce qui concerne le rechargement des accumulateurs, il est prévu de transformer le moteur en générateur lors des périodes de freinage, ou dans les descentes, ce qui fera office de frein moteur. On peut aussi envisager de transformer l'énergie cinétique accumulée en énergie potentielle en se servant d'une turbine réversible remplissant un réservoir d'air sous pression. Cette énergie potentielle pourra ensuite être à nouveau transformée en énergie cinétique pour soulager le moteur électrique.

On décrira maintenant à titre d'exemple non limitatif, un mode de réalisation particulier de l'invention en référence aux dessins annexes dans lesquels :
- La figure 1 représente le schéma d'ensemble de l'invention.
- La figure 2 représente un véhicule en particulier.
- La figure 3 représente le schéma du système de contrôle d'accès.

On ne décrira pas ici la conception d'un véhicule automobile à propulsion électrique considérant que cela est bien connu et ne faisant pas partie à proprement parlé de l'invention.

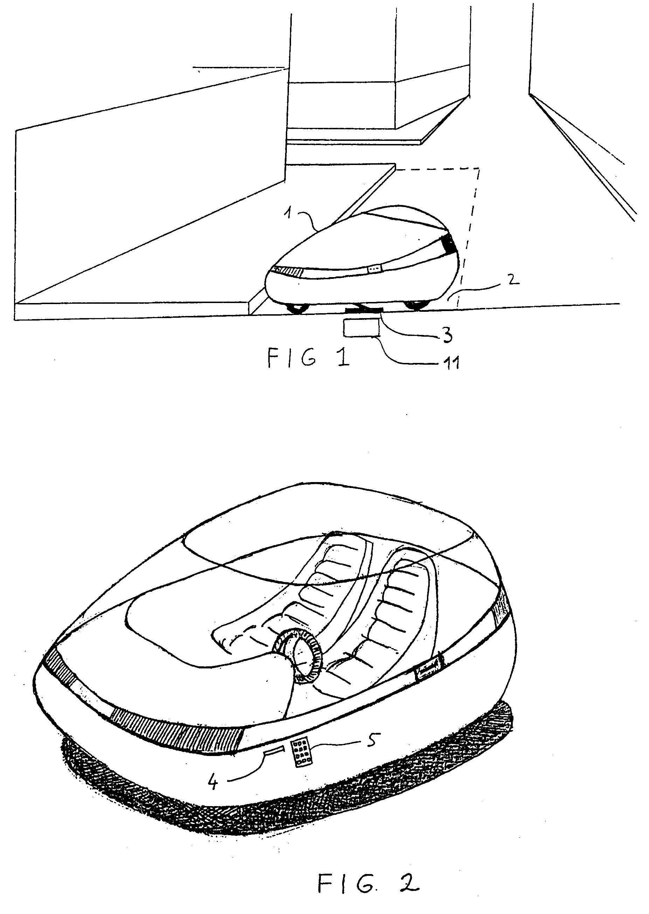

Sur la figure 1 on voit une rue dans laquelle se trouve l'un des véhicules automobiles (1) précédemment décrit, celui-ci est garé sur un emplacement (2) spécialement aménagé pour permettre la recharge des accumulateurs par l'intermédiaire du bras (3) que l'on aperçoit déplié sous le véhicule. L'aménagement spécial d'un emplacement consiste entre autre à intégrer dans le sol un boîtier (11) permettant la reconnaissance entre ledit emplacement et un véhicule quelconque pour autoriser la restitution du support de mémoire par le véhicule et valider le passage du courant de recharge.

Sur la figure 2, on voit un véhicule seul, comportant de préférence deux places, avec en particulier la fente (4) permettant l'accès au lecteur de support mémoire morte programmable, et le clavier (5) permettant l'envoi du code. Ledit clavier (5) est à touches sensitives pour éviter les dégradations.

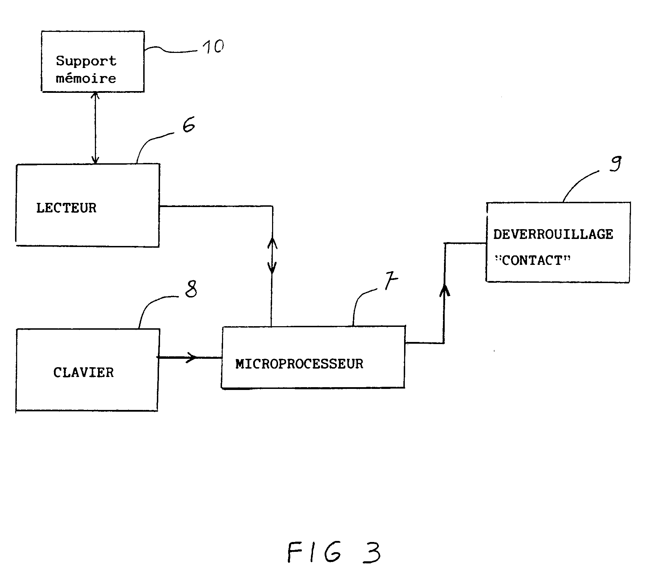

Sur la figure 3, on voit le schéma du système de contrôle d'accès. Pour prendre un véhicule, l'utilisateur doit insérer son support de mémoire morte programmable (10) dans le lecteur (6). Le microprocesseur (7) vérifie la validité de ladite mémoire et attend l'envoi du code secret par l'intermédiaire du clavier extérieur (8). Lorsque le code est reconnu, le microprocesseur (7) actionne le déverrouillage (9) des portes ou du toit pivotant et met le "contact" pour permettre au véhicule de se déplacer.

## Revendications

1. Système de transport urbain à recharge automatisée comprenant en combinaison une pluralité de véhicules automobiles (1), comprenant chacun un moteur électrique et une batterie d'accumulateurs, au moins un emplacement de stationnement (2) comportant des moyens de recharge desdites batteries d'accumulateurs, et une pluralité de cartes supports de mémoire morte programmable (10); chaque véhicule comprenant en outre un moyen de réception (6) dudit support et des moyens de traitement des données contenues dans ladite mémoire caractérisé en ce que chaque véhicule (1) possède un réservoir d'air rempli par une turbine réversible pendant les décélérations et les périodes de freinage et des moyens (11) capables de ne restituer ladite carte support de mémoire morte programmable (10) à l'utilisateur que lorsque le véhicule (1) arrive audit emplacement de stationnement (2) permettant la recharge des accumulateurs, la reconnaissance entre le véhicule (1) et l'emplacement (2) étant effectuée de manière optique par l'envoi d'un code infrarouge codé, ou de façon électrique par l'envoi d'un courant faible, le courant de charge ne circulant qu'après cette reconnaissance mutuelle entre le véhicule et l'emplacement spécialisé.

2. Système de transport urbain à recharge automatisée, selon la revendication 1, caractérisé en ce que la recharge s'effectue selon des contacts galvaniques de trouvant sur un bras articulé (3) se dépliant et entrant en contact avec une prise spécialement aménagée.

3. Système de transport urbain à recharge automatisée selon la revendication 1, caractérisé en ce que la recharge s'effectue sans contact galvaniques, se servant de courant induit suivant le principe utilisé dans les transformateurs, le primaire comprenant une demi carcasse magnétique et le secondaire étant solidaire d'un bras (3) susceptible de venir en contact avec le sol lors de l'arrêt définitif du véhicule.

4. Système de transport urbain à recharge automatisée selon la revendication 1 caractérisé en ce que chaque véhicule (1) est pourvu d'un clavier (5) destiné à recevoir un code confidentiel qui est reconnu par le microprocesseur (7) lequel actionne le déverrouillage (9) des portes.

5. Système de transport urbain à recharge automatisée selon la revendication 1 caractérisé en ce que la turbine est émettrice vers le réservoir pendant les décélérations et les périodes de freinage et motrice grâce à l'air sous pression lorsque cela est nécessaire.

6. Système de transport urbain à recharge automatisée selon les revendications 1 et 4 caractérisé en ce qu'une nouvelle introduction du code sur le clavier (5) est nécessaire pour entrer à nouveau dans le véhicule lors des arrêts temporaires, la carte support de mémoire morte programmable (10) n'étant pas restituée et la facturation se poursuivant lors des arrêts temporaires.

## Claims

1. An automatically recharged urban transport system comprising, in combination, several automobiles (1), each comprising an electric motor and a battery of accumulators, at least one parking place (2) comprising means of recharging the said batteries of accumulators, and several programmable read only memory cards (10); each vehicle comprising in addition a means of reception (6) of the said card and of processing the data contained in the said memory, distinguished by the fact that each vehicle (1) has a compressed air tank filled by a reversible turbine during deceleration and braking, and means capable of only returning the said programmable read only memory card (10) to the user when the vehicle (1) arrives at the said parking place (2) allowing the accumulators to be recharged, recognition between the vehicle (1) and the space (2) being optical or electrical, by sending a coded infrared, or low current electric code, the charging current only passing after this mutual recognition between the vehicle and the specialist place.

2. An automatically recharged urban transport system, according to claim 1, distinguished by the fact that the recharging is done via galvanic contacts on an articulating arm (3) extending and entering into contact with a specially designed socket.

3. An automatically recharged urban transport system, according to claim 1, distinguished by the fact that the recharging is done without galvanic contacts, using induced current according to the principle used in transformers, with the primary comprising a magnetic half-case, and the secondary fixed to an arm (3) able to touch the ground when the vehicle is finally stopped.

4. An automatically recharged urban transport system, according to claim 1, distinguished by the fact that the vehicle (1) is fitted with a keyboard (5) to receive a confidential code recognised by the microprocessor (7) which then releases the door locks (9).

5. An automatically recharged urban transport system, according to claim 1, distinguished by the fact that the turbine sends compressed air to the tank during deceleration and braking and is driven by compressed air whenever necessary.

6. An automatically recharged urban transport system, according to claim 1 and 4, distinguished by the fact that it is necessary to re-enter the code to the keyboard (5) at temporary stops, the programmable read only memory card (10) not being returned, and invoicing continuing during temporary stops.

## Patentansprüche

1. Städtisches Verkehrssystem mit automatisierter Nachladung, das aus einer Kombination einer Vielzahl selbstfahrender Fahrzeuge (1) mit jeweils einem Elektromotor und einer Akkumulatorenbatterie und mindestens einem Parkplatz (2) mit Aufladungsmöglichkeit für die Akkumulatorenbatterien, und einer Vielzahl an Speicherkarten mit programmierbarem Festspeicher (19) besteht; jedes Fahrzeug weist darüber hinaus eine Aufnahmemöglichkeit (6) für besagten Informationsträger auf, sowie Vorrichtungen zur Verarbeitung der auf dem diesem Speicher enthaltenen Daten. Jedes Fahrzeug (1) enthält eine Luftkammer, die durch eine umsteuerbare Turbine während der Verlangsamungen und der Bremsmomente gefüllt wird, und verfügt über Vorrichtungen (11), die die programmierbare Festspeicherkarte (10) nur dann dem Benutzer zurückgeben, wenn sein Fahrzeug (1) an besagtem Parkplatz (2) ankommt, an dem die Akkumulatorenbatterien aufgeladen werden können. Das Identifizieren des Fahrzeugs (1) und des dazugehörigen Parkplatzes (2) erfolgt auf optischem Wege durch das Aussenden eines verschlüsselten Infrarot-Codes, oder auf elektrischem Weg durch das Aussenden eines Schwachstroms, wobei der Ladestrom erst darm fließt, nachdem Fahrzeug und dazugehöriger Spezialparkplatz identifiziert wurden.

2. Städtisches Verkehrssystem mit automatisierter Nachladung gemäß Anspruch 1, das dadurch gekennzeichnet ist, daß die Nachladung über verzinkte Kontakte erfolgt, die sich auf einem Gelenkarm (3) befinden, der ausfährt und mit einer speziell dafür vorgesehenen Abgriffstelle in Kontakt tritt.

3. Städtisches Verkehrssystem mit automatisierter Nachladung gemäß Anspruch 1, das dadurch gekennzeichnet ist, daß die Nachladung nicht über verzinkte Kontakte, sondern über Sekundärstrom gemäß dem bei Transformatoren angewendeten Prinzip erfolgt. Die Primärseite umfaßt ein Halb-Magnetgestell, die Sekundärseite ist mit einem Arm (3) verbunden, der beim definitiven Ausschalten des Fahrzeugs mit dem Boden in Kontakt kommt.

4. Städtisches Verkehrssystem mit automatisierter Nachladung gemäß Anspruch 1, das dadurch gekennzeichnet ist, daß jedes Fahrzeug (1) mit einer Tasteneinheit (5) versehen ist, auf der der vom Mikroprozessor (7) erkannte Geheimcode zum Verriegeln der Türen einzugeben ist.

5. Städtisches Verkehrssystem mit automatisierter Nachladung gemäß Anspruch 1, das dadurch gekennzeichnet ist, daß die Turbine während der Verlangsamungen oder Bremsmomente emittierend in Richtung der Kammer wirkt und auf Grund der unter Druck stehenden Luft gleichzeitig eine Antriebsfunktion innehat, sofern dies notwendig ist.

6. Städtisches Verkehrssystem mit automatisierter Nachladung gemäß Anspruch 1 und 4, das dadurch gekennzeichnet ist, daß eine erneute Code-Eingabe auf der Tasteneinheit (5) notwendig ist, um nach kurzfristigem Stillstand erneut in das Fahrzeug einsteigen zu können. Bei kurzen Unterbrechungen wird die programmierbare Festspeicherkarte nicht zurückgegeben und die Fakturierung läuft weiter.
